# EUROPÄISCHE PATENTSCHRIFT

(11) **EP 1 992 856 B1**
(45) Veröffentlichungstag und Bekanntmachung des Hinweises auf die Patenterteilung: **11.11.2020**
(21) Anmeldenummer: 08156471.8
(22) Anmeldetag: 19.05.2008
(51) Int. Cl.: F16K 31/06

(54) **Stromlos geschlossenes Magnetventil**
Non-electrical closed magnetic valve
Soupape magnétique fermée sans courant

(30) Priorität: 18.05.2007 DE 202007007129 U; 20.03.2008 DE 102008000781
(43) Veröffentlichungstag der Anmeldung: 19.11.2008
(73) Patentinhaber: Bavaria Fluid Systems GmbH, 75175 Pforzheim (DE)
(72) Erfinder: Zucht, Manfred, 8552 Eibiswald (AT)
(74) Vertreter: Schön, Thilo

(56) Entgegenhaltungen:
- DE-A1- 10 261 610
- DE-A1-102004 048 603
- US-A- 2 279 243
- US-A- 2 638 125
- US-A- 5 374 029
- US-A- 5 450 876

## Beschreibung

Die Erfindung betrifft einen zylindrischen Schließanker für ein stromlos geschlossenes Magnetventil und ein solches Magnetventil.

Das Magnetventil hat eine Hülse auf dem ein Elektromagnet sitzt. An einem Ende der Hülse ist ein magnetischer Anker, der einen Einlass für ein Fluid hat. An dem anderen Ende der Hülse ist ein Ventilsitz als Auslass. An dem Ventilsitz liegt der Schließanker federbelastet an und verschließt diesen. Zur Abdichtung sitzt in einer Aufnahme in der auslassseitigen Stirnseite des Schließankers eine elastische Pastille. Um den Ventilsitz freizugeben, kann der Elektromagnet erregt werden. Auslassseitig ist die Mantelfläche des Schließankers verjüngt. In der verjüngten Mantelfläche mündet mindestens ein von der einlassseitigen Stirnfläche des Schließankers ausgehender Kanal.

Aus der DE 10 2006 003 543 ist ein entsprechendes Magnetventil bekannt. Bei dem bekannten Magnetventil kommuniziert die Aufnahme in der die Pastille sitzt über einen Stichkanal mit dem von der einlassseitigen Stirnfläche des Ankers ausgehenden und in der verjüngten Mantelfläche mündenden Kanal.

Der Erfindung liegt die Aufgabe zu Grunde das bekannte Magnetventil zu verbessern.

DE 10 2004 048 603 zeigt einen Schließanker mit einer durchgehenden axialen Bohrung als Fluidkanal. Die Mantelfläche des Schließankers hat einen verjüngten Abschnitt, in den Radialbohrungen eingebracht sind, welche die axiale Bohrung mit einem sogenannten äußeren Druckbereich verbinden. Der verjüngte Bereich der Mantelflache ist zylindrisch.

Auch DE 102 61 610 A1 zeigt ein Magnetventil mit einem Schließanker. Der Schließanker hat einen Bereich mit einem vergrößerten Außendurchmesser sowie einen nach Art einer Einschnürung ausgebildeten Bereich verringerten Außendurchmessers. In den Bereich verringerten Außendurchmessers sind radiale Abströmbohrungen eingebracht, die in einer axialen Durchgangsbohrung münden, um die als Fluidkanal dienende Durchgangsbohrung mit einem sogenannten Hochdruckgasraum zu verbinden.

US 5,374,029 A zeigt einen Schließanker mit einem Sackloch, in dem ein scheibenförmiges Dichtelement sitzt, dessen Mantelfläche ventilsitzseitig verjüngt ist. Dieses Dichtelement wird von einem Haltering gehalten, welcher nicht am Ventilsitz des Ventils anliegt.

Die Aufgabe ist durch einen Schließanker nach den unabhängigen Ansprüchen, bzw. durch ein Magnetventil mit einem Schließanker nach den unabhängigen Ansprüchen gelöst.

Nach dem Anspruch 1 hat der Schließanker auf der verjüngten Mantelfläche eine Ringnut. In die Ringnut mündet das auslassseitige Ende des Kanals bzw. bei mehreren Kanälen oder einem verzweigten Kanal deren auslassseitige Enden. Dem liegt die Erkenntnis zugrunde, dass bei dem bekannten Magnetventil bei geöffnetem Ventilsitz die verjüngte Mantelfläche nicht gleichmäßig umströmt und folglich beim Spülen des Ventils auch nicht gereinigt wird. Es besteht insbesondere bei einem Einsatz im Lebensmittelbereich die Gefahr einer Verkeimung des Magnetventils. Nach der Erfindung wird bei geöffnetem Magnetventil jedoch zunächst die Ringnut durchströmt und anschließend strömt das Fluid über den Rand der Ringnut auf den auslassseitig verbleibenden Teil der verjüngten Mantelfläche. Dadurch wird die verjüngte Mantelfläche gleichmäßig umspült, und es sinkt die Gefahr einer Verkeimung. Dies mag zunächst überraschen, weil man meint, dass die Ringnut schlecht zu spülen und deshalb einer Verkeimung eher förderlich sei. Diese Annahme wurde jedoch durch Versuche widerlegt. Zwischen der nicht verjüngten Mantelfläche und der Hülse fließt bei geöffnetem Ventil ein kleiner aber nicht zu vernachlässigender Teil des Fluids vom Ventileinlass zu dem Ventilsitz. Dieser Teil trägt mit dazu bei, dass die Ringnut ausreichend gespült wird. Durch die Vergleichmäßigung der Umspülung der verjüngten Mantelfläche wird als weiterer Vorteil der Strömungswiderstand des Magnetventils gesenkt.

Die Aufnahme für die Pastille ist ein Sackloch. Die Pastille sitzt in der Aufnahme und hat bevorzugt mindestens eine Ausnehmung zur Ableitung und/oder Speicherung von Luft. Dem liegt die Erkenntnis zugrunde, dass bei dem bekannten Magnetventil der Stichkanal bei geöffnetem Ventil nicht durchströmt wird, deshalb verbleiben dort auch nach einem Spülvorgang Fluidreste. Dies ist für Ventile, die im Lebensmittelbereich eingesetzt werden sollen nachteilig, weil die Gefahr besteht, dass Fluidreste dem Stichkanal verbleiben und verkeimen. Versuche mit Magnetventilen ohne Stichkanal ergaben, dass diese Magnetventile nicht zuverlässig schließen, denn beim maschinellen Einsetzen der Pastille in die Aufnahme bleibt zwischen der Pastille und der einlassseitigen Begrenzung der Aufnahme ein Luftpolster. Deshalb liegt die Pastille nicht flächig an der einlassseitigen Begrenzung an und dichtet den Ventilsitz nicht zuverlässig ab. Nach der Erfindung kann die nach dem Stand der Technik über den Stichkanal abgeführte Luft nun durch die Ausnehmung der Pastille entweichen und/oder oder in der Ausnehmung verbleiben. In jedem Fall sind die Position und die Anlageflache der Pastille in der Aufnahme definiert. Deshalb schließt das Ventil auch ohne den Stichkanal zuverlässig.

Zur Ableitung der Luft hat die Pastille insbesondere eine ihre Stirnseiten verbindende Ausnehmung, z.B. kann die Pastille ringförmig sein.

Bevorzugt ist die Ausnehmung als Überdruckventil ausgeformt. Dazu kann die Ausnehmung die Stirnseiten der Pastille verbinden und in Richtung des Ventilsitzes soweit verjüngt sein, dass sie geschlossen ist. Die Begrenzung der Ausnehmung bildet dann eine z.B. umlaufende Dichtlippe, die im Normalfall geschlossen ist. Ist aber aufgrund des Einsetzens der Pastille in die Aufnahme ein Luftpolster der Aufnahme, dann gibt die elastische Pastille etwas nach und die Dichtlippe öffnet, wodurch die Luft entweicht. Nun liegt die Pastille definiert an der einlassseitigen Begrenzung der Aufnahme, d.h. an dem Boden der Aufnahme an. Zudem kann das Fluid, dessen Strom später mit dem Magnetventil gesteuert wird nicht in die Ausnehmung eindringen. Eine Verkeimung der Ausnehmung der Pastille ist folglich nicht zu erwarten.

Die Pastille kann sich über ein Federelement, z.B. eine Schraubenfeder oder eine Gummieinlage, an dem Boden der Aufnahme abstützen. Auch so kann eine definierte Position der Pastille sichergestellt werden. Wenn die Aufnahme gestuft verjüngt ist, dann kann das Federelement in dem verjüngten Bereich sitzen.

Wenn die einlassseitige Stirnfläche der Pastille gewölbt, z.B. konvex ist, dann verbleibt zwischen dem Boden der Aufnahme und der Pastille eine Spalt, der die Luft beim einsetzen aufnimmt, dennoch liegt die Pastille definiert an dem Boden der Aufnahme an.

Bevorzugt umfasst der Kanal eine von der einlassseitigen Stirnfläche des Schließankers ausgehende und zu dessen Zylinderachse koaxiale Sackbohrung, die natürlich auch gefräst sein kann und dann nicht zylindrisch sein muss. In den Endbereich der Sackbohrung des Kanals münden bevorzugt drei oder vier von der Ringnut auf der verjüngten Mantelfläche ausgehende Ausnehmungen. Besonders bevorzugt beträgt der Winkel zwischen den Achsen der Ausnehmungen und der Achse der Sackbohrung zwischen 90° und 165°, insbesondere zwischen 105° und 155°.

Das Ende der Sackbohrung des Kanals hat bevorzugt die Form einer Kegelspitze oder eines Kegelstumpfes. Die weiteren Bohrungen können in der Kegelspitze oder dem Kegelstumpf münden. Dadurch wird der Strömungswiderstand reduziert und das Ende der Sackbohrung durchströmt, d.h. es kann ggf. zuverlässig gespült werden.

Anhand der Zeichnung wird die Erfindung beispielhaft beschrieben. Es zeigt:
- Fig. 1:: Ein Magnetventil nach dem Stand der Technik,
- Fig. 2:: einen Schließanker nach der Erfindung,
- Fig. 3a u. 3b:: einen weiteren Schließanker nach der Erfindung,
- Fig. 4 bis 7:: weitere Ausführungsformen der Erfindung,
- Fig. 8a:: eine nicht erfindungsgemäße konvexe Pastille für einen Schließanker
- Fig. 8b:: eine nicht erfindungsgemäße bikonvexe Pastille für einen Schließanker
- Fig. 9:: eine Pastille mit einer ihre Stirnseiten verbindenden Ausnehmung für einen Schließanker nach der Erfindung,
- Fig. 10:: eine Pastille mit einer ihre Stirnseiten verbindenden Ausnehmung für einen Schließanker nach der Erfindung,

Für gleiche oder ähnliche Teile verschiedener Ausführungsformen werden aus Gründen der Einfachheit z.T. identische Bezugszeichen benutzt.

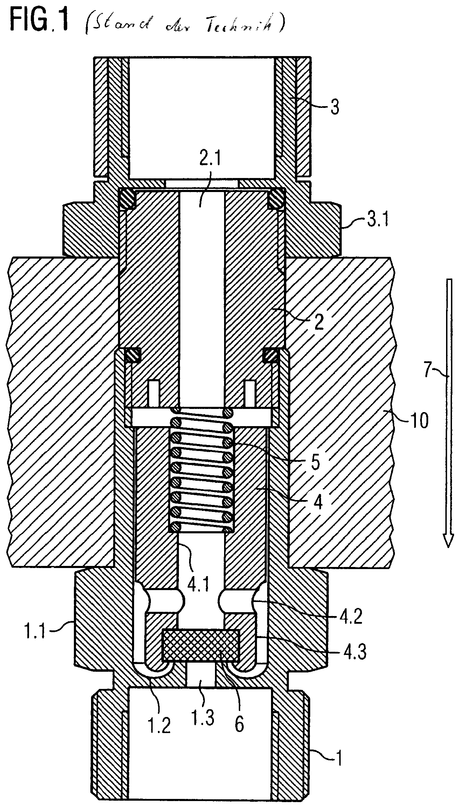

Das stromlos geschlossene Magnetventil in Figur 1 hat ein Ventilgehäuse 1 an dem ein magnetischer erster Anker 2 befestigt ist, sowie einen durch eine Feder 5 belasteten, beweglichen magnetischen zweiten Anker 4, der auch als Schließanker 4 bezeichnet wird und bei erregtem Magneten 10 einen Durchlaß 1.3 eines Ventilsitzes 1.2 freigibt und ansonsten verschließt. Der Ventilsitz 1.2 und das Ventilgehäuse 1 sind einstückig. Bei großen Stückzahlen bietet es sich alterntiv an das Ventilgehäuse aus einem nahtlos gezogenen Rohr zu fertigen und den Ventilsitz daran zu befestigen, z.B. durch Einpressen, Verschrauben, Verschweißen, Einbördeln oder dgl.. Zur Reduzierung des Strömungswiderstandes und zur Vermeidung von Ablagerungen ist das Ventilgehäuse 1 hülsenförmig und mit dem erster Anker 2 koaxial verbunden. Der erste Anker 2 ist zylindrisch und hat mindestens eine, die Stirnflächen verbindende Ausnehmung 2.1, welche bei geöffnetem Ventil durchströmt wird. Der zweite Anker 4 ist koaxial zu dem Ventilgehäuse 1 und dem ersten Anker 2 in dem Ventilgehäuse 1 beweglich. Der Durchlaß 1.3 des Ventilsitzes 1.2 ist koaxial zur Achse des hülsenförmigen Ventilgehäuses 1. Wird der Magnet 10 erregt, so wird der zweite Anker 4 in Richtung des ersten Ankers 2 gegen die Kraft der Feder 5 koaxial verschoben, wodurch der ansonsten verschlossene Durchlaß 1.3 des Ventilsitzes 1.2 freigegeben wird. Das Ventil kann nun von dem zu steuernden Fluid durchströmt werden, wobei der Pfeil 7 die Vorzugsströmungsrichtung angibt. Die Vorzugsströmungsrichtung wird im Rahmen dieser Anmeldung vereinfachend als Strömungsrichtung bezeichnet. Die Begriffe einlassseitig und auslassseitig beziehen sich auf die Strömungsrichtung.

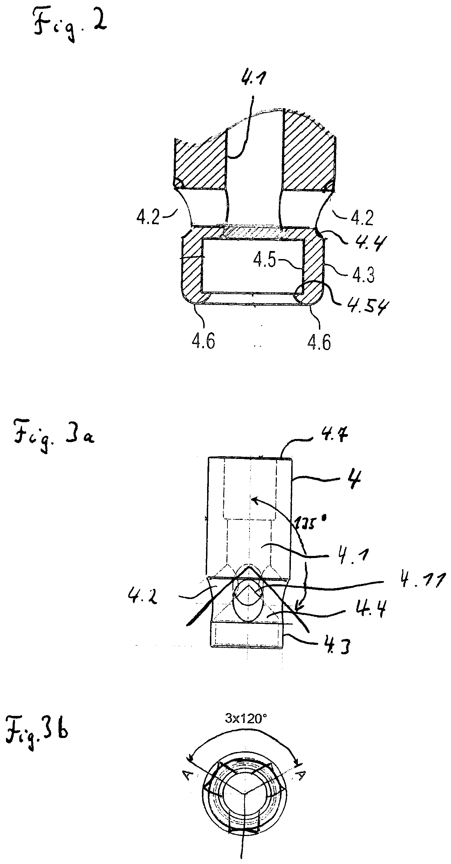

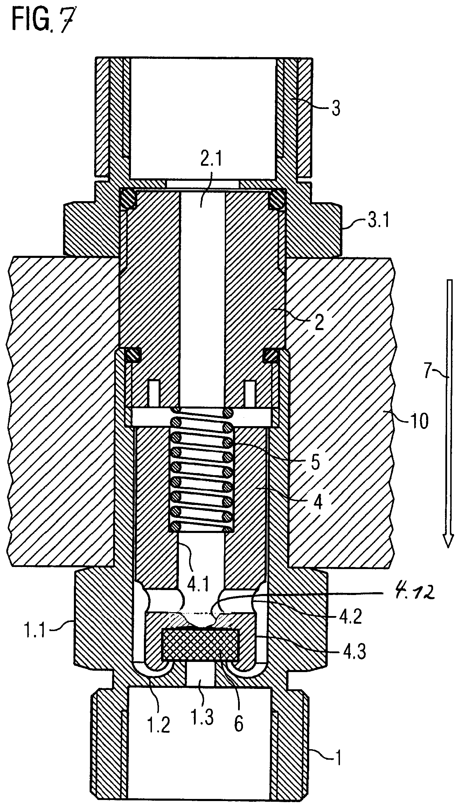

Figur 2 zeigt einen Teil eines Schließankers 4 nach der Erfindung. Der Schließanker 4 wird wie der Schließanker nach Fig. 1 in ein Magnetventil eingesetzt. Anders als der Schließanker aus Fig. 1 hat der Schließanker nach der Erfindung keinen Stichkanal. Auslassseitig hat der Schließanker in seiner Stirnseite ein Sackloch als Aufnahme 4.5 für eine elastische Pastille 6 insbesondere nach einer der Figuren 7 bis 10. Durch die Form der Pastillen bildet sich zwischen der einlassseitigen Begrenzung der Aufnahme 4.5, d.h. dem Boden der Aufnahme 4.5 und der Pastille jedoch kein Luftpolster; die entsprechende Pastille liegt bei geschlossenem Magnetventil definiert an dem Boden an. Der Schließanker 4 hat einen von der einlassseitigen Stirnseite (nicht dargestellt, vgl. Fig. 1) ausgehenden Kanal, der in eine verjüngte Mantelfläche 4.3 mündet. Der Kanal besteht aus einer von der einlassseitigen Stirnseite ausgehenden Sackbohrung 4.1 und verzweigt am Ende der Sackbohrung in zwei orthogonal zu der Zylinderachse eingebrachte Ausnehmungen 4.2. Die Ausnehmungen 4.2 münden in einer Ringnut 4.4 auf einer verjüngten Mantelfläche 4.3 des Schließankers. Dadurch wird der Strömungswiderstand eines Magnetventils mit dem Schließanker 4 reduziert.

Figur 3a zeigt eine Seitenansicht und Fig. 3b eine Aufsicht eines weiteren Schließankers 4 nach der Erfindung. Auch dieser Schließanker 4 hat auslassseitig eine verjüngte Mantelfläche 4.3. Von der einlassseitigen Stirnseite 4.7 geht ein Kanal für das Fluid zu einer verjüngten Mantelfläche 4.3. Der Kanal hat eine zur Zylinderachse koaxiale Sackbohrung 4.1, deren Ende die Form einer Kegelspitze hat. Von der Kegelspitze zweigen drei Ausnehmungen 4.2 ab, die in einer Ringnut 4.4 auf der verjüngten Mantelfläche 4.3 münden. Durch die Ringnut wird aus den Ausnehmungen 4.2 austretendendes Fluid gleichmäßig über den Umfang der verjüngten Mantelfläche 4.3 verteilt und umströmt anschließend diese. Die Achsen der drei Ausnehmungen 4.2 schneiden die Achse der Sackbohrung 4.1 in einem gemeinsamen Punkt unter einem Winkel von etwa 135° und sind symmetrisch zur Zylinderachse. Erstaunlicherweise hat sich gezeigt, dass ein Winkel von etwa 150° (140°-160°) einen gegenüber der gezeigten Ausführungsform deutlich reduzierten Strömungswiderstand ergibt. Durch den stumpfen Winkel zwischen der Sackbohrung 4.1 und den Ausnehmungen 4.2 sowie durch das kegelspitzförmige Ende 4.11 der Sackbohrung 4.1 bilden sich am Übergang von der Sackbohrung 4.1 zu den Ausnehmungen 4.2 deutlich weniger Turbulenzen als beispielsweise bei den Ausführungsformen nach Fig. 1 oder 2. Die Aufnahme 4.5 für die Pastille 6 ist identisch mit der in Fig. 2. Alternativ können die Ausnehmungen 4.2, welche die Sackbohrung 4.1 mit der verjüngten Mantelfläche verbinden die Aufnahme 4.5 für die Pastille anschneiden (nicht dargestellt). Beim Einlegen einer Pastille in die Aufnahme kann dann die Luft zwischen der Pastille und der einlassseitigen Begrenzung der Aufnahme 4.5, durch die Ausnehmungen 4.2 entweichen, d.h. es kann eine scheibenförmige Pastille verwendet werden.

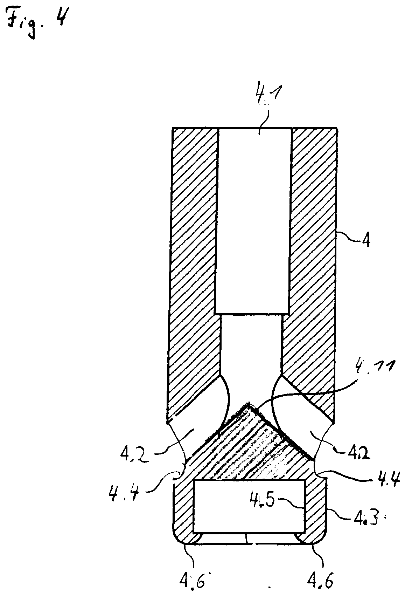

Figur 4 zeigt einen Schließanker 4 im Längsschnitt. Der Schließanker 4 ist in weiten Teilen identisch zu dem Schließanker in Fig. 3a und 3b. Jedoch zweigen von dem kegelspitzförmigen Ende 4.11 der Sackbohrung 4.1 lediglich zwei Ausnehmungen 4.2 ab. Auch bei dieser Ausführungsform münden die Ausnehmungen 4.2 münden in einer Ringnut 4.4 auf der verjüngten Mantelfläche 4.3. Die Aufnahme 4.5 für die Pastille 6 ist identisch mit der in Fig. 2.

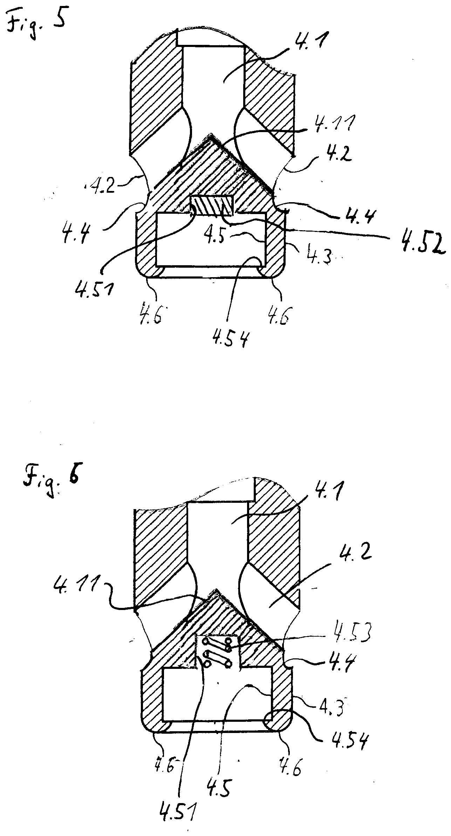

Figur 5 zeigt den auslassseitigen Teil eines Längschnitts durch einen Schließanker 4. Der Schließanker ist weitgehend identisch zu dem Schließanker in Fig. 4, unterscheidet sich aber in der Form der Aufnahme 4.5, die gestuft verjüngt ist. In der Verjüngung 4.51 sitzt ein Element 4.52 als Widerlager für eine Pastille. Das Element 4.52 ist bevorzugt elastisch.

Figur 6 zeigt den auslassseitigen Teil eines Längschnitts durch einen Schließanker 4. Der Schließanker 4 ist weitgehend identisch zu dem Schließanker in Fig. 5, jedoch sitzt nun in der Verjüngung 5.51 der Aufnahme 4.5 eine Schraubenfeder 4.53 als Widerlager für die Pastille (nicht dargestellt).

Figur 7 zeigt ein stromlos geschlossenes Magnetventil wie in Figur 1. Es werden lediglich Unterschiede erläutert. Zwar kommuniziert die Bohrung 4.1 wie in Fig. 1 über einen Stichkanal 4.12 mit der Ausnehmung 4.5 für die Pastille 6, weshalb sich beim Einsetzen der Pastille 6 in die Ausnehmung 4.5 kein Luftpolster darin bildet, jedoch hat der Stichkanal im Längsschnitt die Form einer Glocke. Der Glockenkopf weist in Strömungsrichtung 7 und ist zu der Aufnahme 4.5 der Pastille 6 geöffnet. Durch die S-förmige radiale Begrenzung des Stichkanals 4.12, d.h. durch die in Strömungsrichtung zunächst in Richtung der Achse der Bohrung 4.1 gewölbte und anschließend entgegengesetzt gewölbte Begrenzung des Stichkanals 4.12 bildet sich in dem Stichkanal 4.12 ein Wirbel. Der Wirbel hat einen Austausch mit dem übrigen den Kanal durchströmenden Fluid, deshalb ist auch der Stichkanal zuverlässig spülbar.

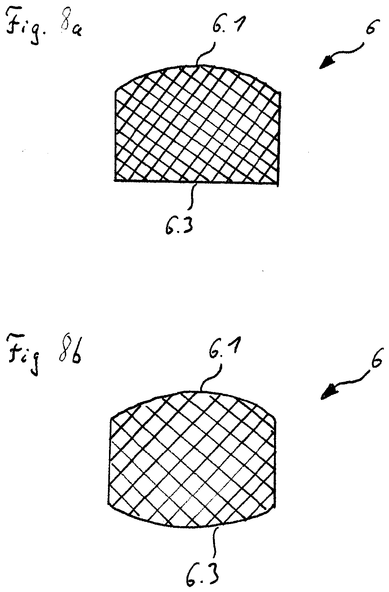

Figur 8a zeigt eine konvexe elastische Pastille 6. Die Pastille wird mit der konvexen Stirnseite 6.1 in eine Aufnahme 4.5 eines der Schließanker 4 nach einer der Figuren 2 bis 6 eingelegt. Die Pastille wird durch einen Vorsprung 4.54 der Aufnahme 4.5 in dieser fixiert (vgl. Fig. 2 bis Fig. 5). Die konvex gewölbte einlassseitige Stirnfläche 6.1 der Pastille 6 liegt nur in dem Bereich der größten Dicke an der einlassseitigen Begrenzung der Aufnahme 4.5 bzw. an dem Element 4.52 oder der Schraubenfeder 4.53 an. Die beim maschinellen Einsetzen der Pastille 6 in die Aufnahme 4.5 komprimierte Luft verbleibt als Widerlager in einem ringförmigen Spalt in dem Bereich reduzierter Dicke der Pastille 6 zwischen der konvexen Stirnfläche 6.1 und der einlassseitigen Begrenzung der Ausnehmung 4.2.

Figur 8b zeigt eine bikonvexe elastische Pastille 6. Auch diese Pastille kann in einer der Aufnahmen 4.5 in den Figuren 1 bis 5 eingesetzt werden. Die konvex gewölbten einlassseitige Stirnfläche 6.1 der Pastille 6 liegt nur in dem Bereich der größten Dicke an der einlasseitigen Begrenzung der Aufnahme 4.5 bzw. an dem Element 4.52 oder der Schraubenfeder 4.53 an. Die auslassseitige Stirnfläche 6.2 ist ebenfalls konvex und dichtet den Ventilsitz ab.

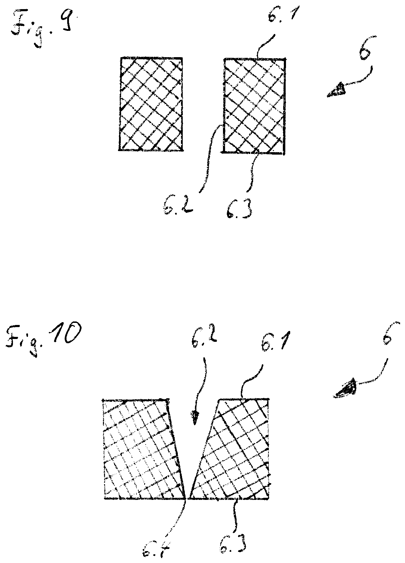

Alternativ kann auch die in Figur 9 im Schnitt gezeigte Pastille in eine der Ausnehmungen 4.5 eingesetzt werden. Die Pastille ist ringförmig. Beim Einsetzen in die Aufnahme 4.5 kann die Luft durch die mittige Ausnehmung 6.2 entweichen. Diese Form hat allerdings den Nachteil, dass in der Ausnehmung 6.2 der Pastille Fluidreste verbleiben und Grundlage für eine Verkeimung des Ventils sein können.

Dies ist bei Verwendung der in Fig. 10 im Schnitt gezeigten Pastille ausgeschlossen. Die Pastille 6 hat zwar auch eine ihre beiden Stirnseiten 6.1 und 6.3 verbindende Ausnehmung 6.2, jedoch ist diese in Richtung des Ventilsitzes konisch verjüngt. Im Bereich der ventilsitzseitigen Stirnfläche 6.2 ist die Ausnehmung soweit verengt, dass die Ausnehmung 6.2 verschlossen. Im ventilsitzseitigen Bereich bildet die Begrenzung der Ausnehmung 6.2 eine Dichtlippe 6.4. Beim Einsetzen der Pastille 6 in eine Aufnahme 4.5 in der auslassseitigen Stirnfläche eines Schließankers öffnet die Dichtlippe 6.4 durch den entstehenden Überdruck, die Luft entweicht und die Pastille sitzt in der vorgesehenen, d.h. definierten Position in der Ausnehmung. In der Folge liegt ihre einlassseitige Stirnfläche 6.1 flächig an der einlassseitigen Begrenzung der Aufnahme 4.5 an.

### Bezugszeichenliste

- 1: Ventilgehäuse
- 1.1: Flansch des Ventilgehäuses
- 1.2: Ventilsitz
- 1.3: Durchlaß des Ventilsitzes

- 2: erster Anker
- 2.1: axiale Bohrung im ersten Anker

- 3: Fitting
- 3.1: Flansch des Fittings

- 4: zweiter Anker/Schließanker
- 4.1: axiale Bohrung des zweiten Ankers
- 4.11: kegelspitzförmiges Ende der axialen Bohrung
- 4.12: Stichkanal
- 4.2: verbindende Ausnehmung
- 4.3: verjüngte Mantelfläche des zweiten Ankers
- 4.4: Ringnut in der Mantelfläche 4.3
- 4.5: Aufnahme für Pastille 6
- 4.51: Verjüngung der Aufnahme 4.5
- 4.52: Widerlagerelement
- 4.53: Schraubenfeder
- 4.54: Vorsprung
- 4.6: ablaufseitiger Stirnrand des Schließankers

- 5: Schraubenfeder

- 6: elastische Pastille

- 6.1: einlassseitige Stirnfläche der Pastille
- 6.2: die Stirnflächen der Pastille verbindende Ausnehmung
- 6.3: auslassseitige Stirnfläche der Pastille
- 6.4: Dichtlippen der Pastille

- 7: Vorzugsströmungsrichtung

- 10: Elektromagnet

## Patentansprüche

1. Zylindrischer Schließanker (4) zum Öffnen oder Schließen eines stromlos geschlossenen Magnetventils durch Verschieben des Schließankers (4) in einem hülsenförmigen Ventilgehäuse (1) zwischen einem magnetischen Anker (2) an einem Ende des Ventilgehäuses (1) mit einem Einlass für ein Fluid und einem Ventilsitz (1.2) als Auslass am anderen Ende des Ventilgehäuses (1), mittels eines auf dem Ventilgehäuse (1) sitzenden Elektromagneten, wobei der Schließanker (4) auslassseitig eine verjüngte Mantelfläche (4.3) hat, in die mindestens ein von der einlassseitigen Stirnfläche (4.7) des Schließankers (4) ausgehender Kanal mündet und wobei der Schließanker (4) in der auslassseitigen Stirnfläche eine Aufnahme (4.5) hat, in der eine elastische Pastille (6) sitzt, welche im geschlossenen Zustand des Magnetventils am Ventilsitz (1.2) anliegt, wobei die Aufnahme (4.5), in der die elastische Pastille (6) sitzt, ein Sackloch ist,
**dadurch gekennzeichnet, dass** die Pastille (6) eine Ausnehmung (6.2) hat und die Ausnehmung (6.2) die Stirnseiten der Pastille (6) verbindet.

2. Schließanker (4) nach Anspruch 1,
**dadurch gekennzeichnet, dass**
die elastische Pastille (6) ein Ring ist.

3. Schließanker (4) nach einem der Ansprüche 1 oder 2,
**dadurch gekennzeichnet, dass**
die Ausnehmung (6.2) in der Pastille (6) in Richtung der auslassseitigen Stirnfläche (6.3) der Pastille (6) verjüngt ist.

4. Schließanker (4) nach einem der Ansprüche 1 bis 3,
**dadurch gekennzeichnet, daß**
in der Aufnahme (4.5) ein Widerlagerelement (4.52) ist, welches bei geschlossenem Ventil eine in Richtung des Ventilsitzes (1.2) gerichtete Kraft auf die Pastille (6) ausübt.

5. Schließanker nach einem der Ansprüche 1 bis 4,
**dadurch gekennzeichnet, daß**
die einlassseitige Stirnseite (6.1) der elastischen Pastille (6) gewölbt ist.

6. Schließanker nach einem der Ansprüche 1 bis 5,
**dadurch gekennzeichnet, daß**
der Kanal in eine Ringnut (4.4) auf der verjüngten Mantelfläche (4.3) mündet.

7. Schließanker nach Anspruch 6,
**dadurch gekennzeichnet, daß**
die Ringnut (4.4) konvex ist.

8. Schließanker nach einem der vorstehenden Ansprüche,
**dadurch gekennzeichnet, daß**
der Kanal eine von der einlassseitigen Stirnfläche (4.7) des Schließankers (4) ausgehende und zu dessen Zylinderachse koaxiale Sackbohrung (4.1) umfasst.

9. Schließanker nach Anspruch 8,
**dadurch gekennzeichnet, daß**
der Kanal mindestens eine weitere Ausnehmung (4.2) aufweist, die die Sackbohrung (4.1) mit der verjüngten Mantelfläche (4.3) verbindet.

10. Schließanker nach Anspruch 8 oder 9,
**dadurch gekennzeichnet, daß**
der Boden der Sackbohrung (4.1) des Kanals die Form einer Kegelspitze oder eines Kegelstumpfes hat.

11. Schließanker nach dem vorstehenden Anspruch,
**dadurch gekennzeichnet, daß**
mindestens eine der weiteren Ausnehmungen (4.2) des Kanals in dem kegelspitz oder -stumpf förmigen Ende der Sackbohrung (4.1) des Kanals mündet.

12. Stromlos geschlossenes Magnetventil mit einem Schließanker (4) nach einem der vorstehenden Ansprüche.

## Claims

1. Cylindrical locking anchor (4) for opening or closing a current-less sealed magnetic valve by sliding of the locking anchor (4) in a sleeve-shaped valve housing (1) between a magnetic anchor (2) at one end of the valve housing (1) with an inlet for a fluid and a valve seat (1.2) as an outlet at the other end of the valve housing (1), by means of an electro-magnet sitting on the valve housing (1), wherein the locking anchor (4) has on its outlet side a tapering jacket surface (4.3), into which at least one channel opens, which starts from the inlet-side face surface (4.7) of the locking anchor (4), and wherein the locking anchor (4) has a receiving point (4.5) in the outlet-side face surface, in which an elastic element (6) sits, which in the closed state of the magnetic valve is in contact at the valve seat (1.2), wherein the receiving point (4, 5), in which the elastic element (6) sits, is a blind hole,
**characterised in that** the element (6) has a cut-out opening (6.2), and the cut-out opening (6.2) connects the face surfaces of the element (6)

2. Cylindrical locking anchor (4) according to claim 1, **characterised in that** the elastic element (6) is a ring.

3. Cylindrical locking anchor (4) according to any one of claims 1 or 2, **characterised in that** the cut-out opening (6.2) in the element (6) tapers in the direction of the outlet-side face surface (6.3) of the element (6).

4. Cylindrical locking anchor (4) according to any one of claims 1 to 3, **characterised in that** there is an abutment element (4.52) in the receiving point (4.5) which, with the valve closed, exerts a force on the element (6) directed in the direction of the valve seat (1.2).

5. Cylindrical locking anchor according to any one of claims 1 to 4, **characterised in that** the inlet-side face side (6.1) of the elastic element (6) is cambered.

6. Cylindrical locking anchor according to any one of claims 1 to 5, **characterised in that** the channel opens into an annular slot (4.4) on the tapered jacket surface (4.3).

7. Cylindrical locking anchor according to claim 6, **characterised in that** the annular slot (4.4) is convex.

8. Cylindrical locking anchor according to any one of the preceding claims, **characterised in that** the channel comprises a blind hole (4.1), starting from the inlet-side face surface (4.7) of the locking anchor (4) and coaxial to its cylindrical axis.

9. Cylindrical locking anchor according to claim 8, **characterised in that** the channel comprises at least one further cut-out opening (4.2), which connects the blind hole (4.1) to the tapering jacket surface (4.3).

10. Cylindrical locking anchor according to claim 8 or 9, **characterised in that** the base of the blind hole (4.1) of the channel has the shape of the tip of a cone or base of a cone.

11. Cylindrical locking anchor according to the preceding claim, **characterised in that** at least one of the further cut-out openings (4.2) of the channel opens at the end of the blind hole (4.1) which is shaped as the tip or base of a cone.

12. Current-less closed magnetic valve with a locking anchor (4) according to any one of the preceding claims.

## Revendications

1. Armature de fermeture cylindrique (4) pour ouvrir ou fermer une soupape magnétique fermée sans courant en déplaçant l'armature de fermeture (4) dans un boitier de soupape (4) en forme de manchon entre une armature magnétique (2) à une extrémité du boitier de soupape (1) avec une entrée pour un fluide et un siège de soupape (1.2) en tant que sortie à l'autre extrémité du boitier de soupape (1), au moyen d'un électro-aimant disposé sur le boitier de soupape (1), l'armature de fermeture (4) ayant une surface latérale (4.3) amincie côté sortie dans laquelle face latérale débouche au moins un canal partant de la face frontale (4.7) de l'armature de fermeture (4) côté entrée et l'armature de fermeture (4) ayant dans la face frontale côté sortie un logement (4.5) dans lequel est disposée une pastille élastique (6) étant placée contre le siège de soupape (1.2) à l'état fermé de la soupape magnétique, le logement (4.5) dans lequel est disposée la pastille élastique (6) formant un trou borgne, **caractérisée en ce que** la pastille (6) a un évidement (6.2) et l'évidement (6.2) relie les faces frontales de la pastille (6).

2. Armature de fermeture (4) selon la revendication 1, **caractérisée en ce que** la pastille élastique (6) est un anneau.

3. Armature de fermeture (4) selon l'une des revendications 1 ou 2, **caractérisée en ce que** l'évidement (6.2) dans la pastille (6) est aminci en direction de la face frontale (6.3) de la pastille (6) côté sortie.

4. Armature de fermeture (4) selon l'une des revendications 1 à 3, **caractérisée en ce que** dans le logement (4.5) se trouve un élément de butée (4.52) exerçant une force dirigée vers le siège de soupape (1.2) sur la pastille (6) lorsque la soupape est fermée.

5. Armature de fermeture selon l'une des revendications 1 à 4, **caractérisée en ce que** la face frontale (6.1) de la pastille élastique (6) côté entrée est incurvée.

6. Armature de fermeture selon l'une des revendications 1 à 5, **caractérisée en ce que** le canal débouche dans une rainure annulaire (4.4) sur la surface latérale amincie (4.3).

7. Armature de fermeture selon la revendication 6, **caractérisée en ce que** la rainure annulaire (4.4) est convexe.

8. Armature de fermeture selon l'une des revendications précédentes, **caractérisée en ce que** le canal comprend un perçage borgne (4.1) partant de la face frontale (4.7) de l'armature de fermeture (4) côté entrée et étant coaxial avec l'axe de cylindre de l'armature de fermeture.

9. Armature de fermeture selon la revendication 8, **caractérisée en ce que** le canal comporte au moins un évidement supplémentaire (4.2) reliant le perçage borgne (4.1) avec la surface latérale amincie (4.3).

10. Armature de fermeture selon la revendication 8 ou 9, **caractérisée en ce que** le fond du perçage borgne (4.1) du canal a la forme d'une pointe de cône ou d'un tronc de cône.

11. Armature de fermeture selon la revendication précédente, **caractérisée en ce qu'**au moins l'un des évidements supplémentaires (4.2) du canal débouche dans l'extrémité du perçage borgne (4.1) en forme de pointe de cône ou de tronc de cône.

12. Soupape magnétique fermée sans courant avec une armature de fermeture (4) selon l'une des revendications précédentes.
